# EUROPÄISCHE PATENTSCHRIFT

(11) **EP 2 788 833 B1**
(45) Veröffentlichungstag und Bekanntmachung des Hinweises auf die Patenterteilung: **02.08.2017**
(21) Anmeldenummer: 12797882.3
(22) Anmeldetag: 04.12.2012
(51) Int. Cl.: G05G 5/06, G05G 1/08

(54) **RASTVORRICHTUNG FÜR EIN ROTATORISCH ODER TRANSLATORISCH BEWEGBARES BEDIENELEMENT**
LATCHING DEVICE FOR A ROTATIONALLY OR TRANSLATIONALLY MOVABLE OPERATOR CONTROL ELEMENT
DISPOSITIF D'ARRÊT POUR UN ÉLÉMENT DE COMMANDE MOBILE EN ROTATION OU EN TRANSLATION

(30) Priorität: 06.12.2011 DE 102011087829
(43) Veröffentlichungstag der Anmeldung: 15.10.2014
(73) Patentinhaber: Behr-Hella Thermocontrol GmbH, 70469 Stuttgart (DE)
(72) Erfinder: LAMMINGER, Egbert, 59494 Soest (DE)
(74) Vertreter: dompatent von Kreisler Selting Werner - Partnerschaft von Patent- und Rechtsanwälten mbB
(86) Internationale Anmeldenummer: PCT/EP2012/074340
(87) Internationale Veröffentlichungsnummer: WO 2013/083554

(56) Entgegenhaltungen:
- DE-A1- 10 305 668
- DE-A1- 10 323 544
- DE-A1-102006 036 636
- DE-A1-102009 048 330

## Beschreibung

Die Erfindung betrifft eine Rastvorrichtung für ein rotatorisch oder translatorisch bewegbares Bedienelement.

Zur manuellen Bedienung elektrischer bzw. elektronischer Geräte dienen Bedieneinheiten, die Bedienelemente in unterschiedlichsten Ausgestaltungen aufweisen. Neben niederdrückbaren Tasten-Bedienelementen, Schiebern o.dgl. werden in zunehmendem Maße insbesondere bei Fahrzeug-Bedieneinheiten sogenannte Drehsteller, also drehbare Bedienelemente eingesetzt. Bei drehbaren sowie bei translatorisch bewegbaren Bedienelementen ist es wünschenswert, der das Bedienelemente betätigenden Person eine akustische und/oder taktile Rückmeldung bezügliche einer vorgenommenen Verstellung des Bedienelements zu geben. Diesbezüglich haben sich Rastvorrichtungen bewährt, die darüber hinaus den Vorteil haben, dass das Bedienelement die einmal eingenommene Verstellposition selbsttätig hält. Rastvorrichtungen erzeugen darüber hinaus ein mehr oder weniger deutlich wahrnehmbares Rastgeräusch und liefern eine taktile Rückmeldung an die das Bedienelement betätigende Person.

Rastvorrichtungen für Bedienelemente der vorstehend genannten Art sind beispielsweise in DE 10 2007 013 383 B3, DE 10 2006 036 636 A1, welche den nächstliegenden Stand der Technik bildet, DE 102 36 066 A1 und DE 103 23 544 A1 beschrieben.

Die bekannten Rastvorrichtungen arbeiten mit einem federelastisch gelagerten Rastvorsprung, der in Gleitkontakt mit einer Rastkulisse steht, die mehrere Rastmulden mit zwischen diesen angeordneten Rasterhöhungen aufweist. Die Rastkulisse ist im Regelfall als wellenförmige Rastbahn ausgebildet, die eine kontinuierliche durchgehende Oberfläche oder aber abschnittsweise plane (Facetten-)Flächen aufweist.

Auf Grund seiner elastischen Lagerung führt der Rastvorsprung beim Gleiten über die Rastbahn Auf- und Abbewegungen aus. Normalerweise ist der Rastvorsprung Teil eines Federarms,. der bei Betrachtung auf die Rastkulisse außerhalb derselben gelagert ist. Bei einer derartigen Anordnung verändert sich die Ausrichtung der Oberfläche des Rastvorsprungs relativ zur Oberfläche der Rastbahn, wenn der Rastvorsprung bei Betätigung des Bedienelements über die Rastkulisse entlang gleitet.

Die Oberfläche der Rastvorsprünge ist im Allgemeinen sphärisch ausgebildet. Darüber hinaus ist der Berührungskontakt des Rastvorsprungs mit der Rastkulisse herkömmlicherweise als punktförmige Kontaktzone ausgeführt. Der Rastvorsprung besteht zumeist aus Metall und ist sickenförmig, während die Rastkulisse im Regelfall aus Kunststoff besteht. Damit ist die Rastkulisse einem Verschleiß durch den auf ihr entlanggleitenden Rastvorsprung ausgesetzt. Diesen Verschleißerscheinungen versucht man durch Auftragen von Schmiermitteln (wie z.B. Fett) entgegenzuwirken.

Das Rastgeräusch entsteht durch die impulsförmige Kontaktierung des Rastvorsprungs mit der Rastkulisse, wenn sich beide relativ zueinander bewegen, was im Falle der Betätigung des Bedienelements gegeben ist. Das Rastgeräusch kann nur bedingt beeinflusst werden, was recht aufwendig ist.

Aufgabe der Erfindung ist es, eine Rastvorrichtung für ein rotatorisch oder translatorisch bewegbares Bedienelement zu schaffen, das sich durch einen geringeren Verschleiß und eine damit erhöhte Dauerlauffestigkeit und durch reduzierte Geräusche bzw. beeinflussbare Geräusche auszeichnet.

Zur Lösung dieser Aufgabe wird mit der Erfindung eine Rastvorrichtung für ein rotatorisch oder translatorisch bewegbares Bedienelement vorgeschlagen, wobei die Rastvorrichtung versehen ist mit den Merkmalen des Anspruchs 1. Die Unteransprüche beziehen sich auf verschiedene Ausgestaltungen der Erfindung.

Ein wesentliches Merkmal der erfindungsgemäßen Rastvorrichtung ist darin zu sehen, dass der Rastvorsprung mit der Rastbahn, also mit der Oberseite der Rastkulisse, längs mindestens einer Linienzone bzw. Linie in Kontakt steht. Dieser Linienkontakt bzw. jeder Linienkontakt erstreckt sich dabei im Wesentlichen quer zur Erstreckung der Rastbahn. Hierzu weist der Rastvorsprung eine Oberfläche auf, die die Rastbahn längs mindestens einer im Wesentlichen quer zur Längserstreckung der Rastbahn. verlaufenden Kontaktlinie berührt. Diese Berührung längs einer Kontaktlinie gilt vor allem dann, wenn sich der Rastvorsprung außerhalb seines am weitesten in einer Rastmulde eingetauchten Zustandes befindet. Wenn er am weitesten in die Rastmulde eingetaucht ist, kontaktiert der Rastvorsprung die Oberfläche der Rastbahn vorzugsweise.längs zweier Kontaktlinien der zuvor beschriebenen Art, und zwar beidseitig des tiefsten Rastmuldenpunktes an den gegenüberliegenden Flanken, die von dem tiefsten Punkt der Rastmulde aus zu den höchsten Punkten (Scheitelpunkten) der jeweils benachbarten Rasterhöhungen führen.

Der Rastvorsprung vollführt beim Gleiten über die Rastbahn eine Auf- und Abbewegung unter periodischer Veränderung der Neigung seiner Kontaktlinie zur Rastkulisse. Damit nun diese Kontaktlinie als Linienkontakt zwischen dem Rastvorsprung und der Rastkulisse stets beibehalten bleibt, ist erfindungsgemäß vorgesehen, dass die Oberfläche der Rastbahn eine der Veränderung der Ausrichtung der Kontaktlinie des Rastvorsprungs bei dessen Auf- und Abbewegung folgenden Neigungsveränderung aufweist.

Durch die erfindungsgemäße Ausgestaltung der Neigungen der Oberfläche der Rastbahn in Relation zur veränderten Neigung der Oberfläche des Rastvorsprungs bei dessen Auf- und Abbewegung über die Rastkulisse wird für einen dauerhaften Linienkontakt zwischen dem Rastvorsprung und der Rastkulisse gesorgt. Dies führt zu einer geringeren Flächenpressung zwischen Rastvorsprung und Rastkulisse bzw. Rastbahn. Damit besteht die Möglichkeit, die Rastkulisse aus einem verschleißanfälligeren Kunststoffmaterial bzw. aus einem Kunststoffmaterial ohne verschleißmindernde Zusatzstoffe herzustellen. Das wiederum erlaubt es, die Bauteilkosten zu reduzieren. Anders ausgedrückt kann bei gegenüber herkömmlichen Rastvorrichtungen unveränderter Materialauswahl eine höhere Lebensdauerfestigkeit und damit eine erhöhte Dauerlauffestigkeit erreicht werden. Durch die Linienberührung wird darüber hinaus eine stabilere Ruhelage erwirkt. Damit aber wiederum kann die vorspannkraft, mit der der Rastvorsprung gegen die Rastkulisse drückt, verringert werden, was wiederum verschleißmindernd und geräuschreduzierend wirkt.

Durch die Beibehaltung des Linienkontakts beim Gleiten des Rastvorsprungs über die. Rastkulisse erfolgt insgesamt eine Reduzierung der Stoßimpulse, wie sie der Rastvorsprung auf die Rastkulisse bewirkt. Die Reduzierung der Stoßimpulse führt neben einer Verschleißreduktion auch zu einer Geräuschreduktion, und zwar ohne dass, wie es bisher üblich ist, im Rastsystem zusätzliche Hilfsmittel wie beispielsweise Schmierstoffe, Fette o.dgl. verwendet werden müssen. Schließlich bewirkt die erfindungsgemäße Konstruktion auch eine Vergrößerung des Verlustfaktors (Dämpfungsfaktors) sowie eine Verringerung der Nachhallzeit. All dies wirkt sich auf die Performance und insbesondere auf die Haptik und Akustik der Rastvorrichtung vorteilhaft aus. Anders ausgedrückt ist es durch den erfindungsgemäßen Ansatz möglich, Einfluss zu nehmen auf eine Reduzierung des Verschleißes und auf die Akustik, die eine Rastvorrichtung in sich birgt.

In vorteilhafter Ausgestaltung der Erfindung kann vorgesehen sein, dass die bezüglich ihrer Neigung sich verändernde Oberfläche der Rastbahn zwischen den Scheitelpunkten zweier benachbarter Rasterhöhungen als Kegelstumpfteilfläche ausgebildet ist. Alternativ dazu ist es möglich, die Kegelstumpfteilflächen durch ebene Teilflächen zu ersetzen, und zwar ähnlich den Seitenflächen einer Pyramide mit einer vieleckigen (mehr als vier Ecken aufweisenden) Grundfläche. Die Achse des Kegelstumpfes bzw. der Pyramide verläuft dabei im Wesentlichen quer zur Erstreckung der Rastbahn. Bei Ausbildung der Rastmulden in Form ebener unterschiedlich geneigter Teilflächen umfassen diese eine den Grund der Rastmulde bildende erste Fläche und zwei beidseitig dieser ersten Fläche angeordnete zweite Flanken- bzw. Schrägflächen, die zur Seite gekippt bzw. geneigt sind.

Wie bereits oben erwähnt, ist der Rastvorsprung vorzugsweise als Sicke an einem (metallischen) Federarm ausgebildet, dessen eines Ende fixiert ist und an dessen anderen Ende der Rastvorsprung angeordnet ist. Ein derartiger Federarm, der im Wesentlichen quer zur Erstreckung der Rastbahn ausgerichtet ist, durchbiegt sich elastisch beim Auf- und Abbewegen seines Rastvorsprungs zwischen seinem fixierten Ende und dem Rastvorsprung.

Bei einem Federarm der zuvor genannten Art ist die den Rastvorsprung bildende Sicke im Wesentlichen kegelstumpfteilflächenartig ausgebildet, wobei die Kegelachse im Wesentlichen quer zum Verlauf der Rastbahn und damit im Wesentlichen in Richtung des Federarms verläuft.

Als Federarm kann aber auch eine ringförmige Struktur gewählt werden. Dabei folgt der ringförmige Federarm dem Verlauf der Rastbahn im Wesentlichen (bei Draufsicht auf die Rastbahn betrachtet). Derartige Ringfedern werden bevorzugt eingesetzt. Sie weisen im Allgemeinen zwei diametral gegenüberliegend angeordnete Fixierbereiche auf, wobei um 90° versetzt zu diesen Fixierbereichen mindestens ein Rastvorsprung oder zwei Rastvorsprünge ausgebildet ist bzw. sind. Dieser bzw. jeder Rastvorsprung weist bei dieser Weiterbildung der Erfindung eine kegelstumpfteilflächenähnliche Sicke mit einer radial zur Ringform des Federarms verlaufenden Kegelachse auf.

Die Erfindung wird nachfolgend anhand zweier Ausführungsbeispiele sowie unter Bezugnahme auf die Zeichnung näher erläutert. Im Einzelnen zeigen dabei:
- Fig. 1: eine Ansicht auf die Vorderseite einer Heizungsanlagen-Bedieneinheit für ein Fahrzeug,
- Fig. 2: eine Schnittansicht entlang der Linie II-II der Fig. 1 zur Darstellung der Rastvorrichtung in Seitenansicht, und zwar in der Position, in der der Rastvorsprung in eine Rastmulde eingetaucht ist,
- Fig. 3: eine Schnittdarstellung ähnlich der gemäß Fig. 2 jedoch in der derjenigen Stellung des Drehbedienelements, in der der Rastvorsprung eine Rasterhöhung der Rastvorrichtung kontaktiert,
- Fig. 4: eine Schnittansicht entlang der Linie IV-IV der Fig. 2, jedoch ohne dass die Rastfeder dargestellt ist,
- .Fign. 5 und 6: Schnittansichten entlang der Linie IV-IV und V-V der Fign. 2 und 3,
- Fig. 7: eine vergrößerte Darstellung des in Fig. 2 bei VII gekennzeichneten Bereichs zur Verdeutlichung, dass der Rastvorsprung in einer Rastvertiefung die Rastkulisse längs zweier Kontaktlinien berührt,
- Fign. 8 bis 10.: die jeweiligen Kontaktierungen von Rastvorsprung und Rastkulisse beim Eintauchen des Rastvorsprungs in eine Rastvertiefung,
- Fig. 11: eine perspektivische Darstellung einer ringförmigen Rastfeder mit kegelstumpfteilflächenartiger Ausgestaltung der Rastvorsprungssicke,
- Fig. 12: eine Darstellung ähnlich der gemäß Fig. 2 jedoch bei einer alternativ ausgebildeten Rastvorrichtung,
- Fig. 13: eine perspektivische Darstellung der Oberseite der Rastkulisse beim Ausführungsbeispiel der Rastvorrichtung gemäß Fig. 12 und
- Fig. 14: eine perspektivische Darstellung der im Ausführungsbeispiel gemäß Fig. 12 verwendbaren Rastfeder mit Rastvorsprung.

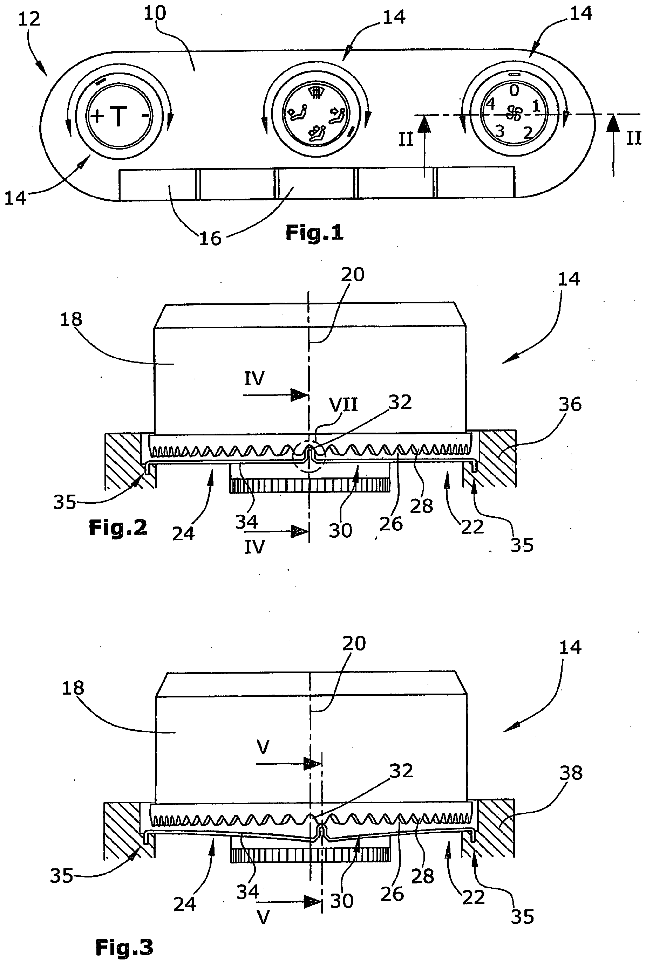

In Fig. 1 ist in Draufsicht die Frontblende 10 einer Bedieneinheit 12 für eine Klima- bzw. Heizungsanlage eines Kraftfahrzeuges gezeigt. Dargestellt sind drei Drehsteller 14 zur Einstellung der Temperatur, der Luftverteilung und der Gebläsestärke. Ferner weist die Bedieneinheit 12 verschiedene Drucktasten 16 auf. Die drei Drehsteller 14 verfügen über Rastvorrichtungen einerseits zur Beibehaltung der aktuell eingenommenen Drehposition und andererseits zur akustischen und taktilen Rückmeldung einer Verstellung an die einen Drehsteller bedienenden Person. Der Aufbau der Rastvorrichtung gemäß einem ersten Ausführungsbeispiel wird nachfolgend anhand der Fign. 2 bis 11 näher beschrieben.

Jeder Drehsteller 14 weist ein Drehbedienelement 18 auf, das um eine Drehachse 20 drehbar gelagert ist. An der unteren axialen Stirnseite 22 weist das Drehbedienelement 18 eine Rastkulisse 24 auf, die stirnseitig längs des Umfangs des Drehbedienelements 18 verläuft und aus wechselweise angeordneten Rastmulden 26 und Rasterhöhungen 28 besteht. Diese Rastmulden 26 und Rasterhöhungen 28 bilden eine Rastbahn 30, entlang derer ein federelastisch gelagerter Rastvorsprung 32 gleitet, wenn das Drehbedienelement 18 betätigt, d.h. gedreht wird. Der Rastvorsprung 32 ist als sickenförmiger Vorsprung einer in diesem Ausführungsbeispiel ringförmigen Feder 34 ausgebildet, die an zwei diametral gegenüberliegenden Fixierbereichen 35 am Gehäuse 36 der Bedieneinheit 12 fixiert ist. Die Fign. 2 und 3 zeigen, wie sich der Rastvorsprung 32 auf- und abbewegt, wenn das Drehbedienelement 18 gedreht wird.

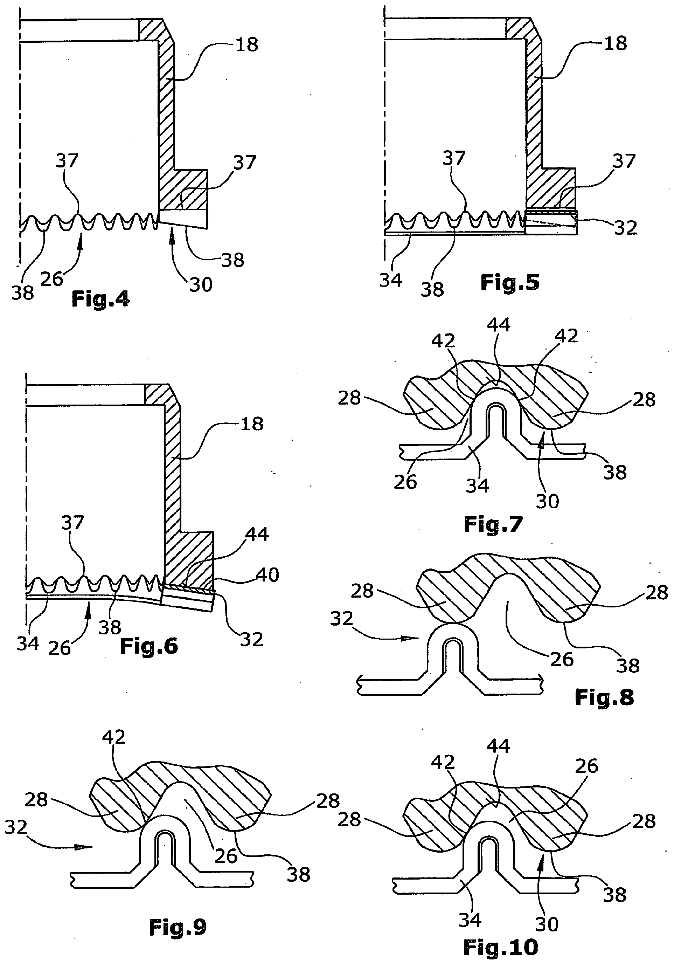

Die Besonderheit der Rastvorrichtung gemäß den Fign. 2 und 3 ist in einer periodischen Neigungsveränderung der Oberflächen der Rastmulden 26 sowie Rasterhöhungen 28 zu sehen. Dies ist in den Fign. 4 bis 6 deutlich gemacht. Anhand von Fig. 4 ist zu erkennen, dass die Rastmulden 26 an ihrem tiefsten Punkt 37 eine andere Neigung aufweisen, als die Rasterhöhungen 28 an ihren Scheitelpunkten 38. Dies ist deshalb gegeben, weil der Rastvorsprung 32 längs einer Kontaktlinie 40 an der Rastbahn 30 anliegt (siehe Fig. 6). Bei Anordnung des Rastvorsprungs 32 in einer Rastmulde 26 erfolgt der Kontakt längs zweier Kontaktlinien 42, wie es in Fig. 7 gezeigt ist.

Wie anhand von Fig. 6 zu erkennen ist, verändert sich die Ausrichtung der Oberfläche 44 des Rastvorsprungs 32, wenn dieser entlang der Rastbahn 30 gleitet. Die Neigung der Rastbahn 30 folgt nun dieser veränderten Ausrichtung der Rastvorsprungsoberfläche 44. Damit ist gewährleistet, dass der Rastvorsprung 32 stets Linienkontakt zur Rastbahn 30 hat. Dies wiederum wirkt sich insbesondere verschleißmindernd und geräuschverringernd aus.

In den Fign. 8 bis 10 sind einzelne Phasen beim Eintauchen des Rastvorsprungs 32 in eine Rastmulde 26 gezeigt. Zu erkennen ist, dass der Rastvorsprung 32 ausschließlich in seiner am tiefsten in die Rastmulde 26 eingetauchten Position längs zweier Kontaktlinien an der Rastbahn 30 anliegt. Durch die Kontaktierung längs der Linienzonen verbleibt für Stoßimpulse, die der Rastvorsprung 32 auf die Rastbahn 30 ausübt, weniger Energie, was zur Folge hat, dass auch die Geräuschentwicklung und der Nachhall reduziert sind.

Damit es erst bei Erreichen der am weitesten in die Rastmulde eingetauchten Position des Rastvorsprungs zu einer Kontaktierung längs zweier Kontaktlinien mit der Rastbahn kommt, sollte der Radius des Rastvorsprungs größer sein als der Radius einer Rastmulde. Mit anderen Worten darf der Rastvorsprung im Bereich seines Scheitelpunktes die Rastmulde nicht kontaktieren, wenn der Rastvorsprung maximal tief in die Rastmulde eingetaucht ist.

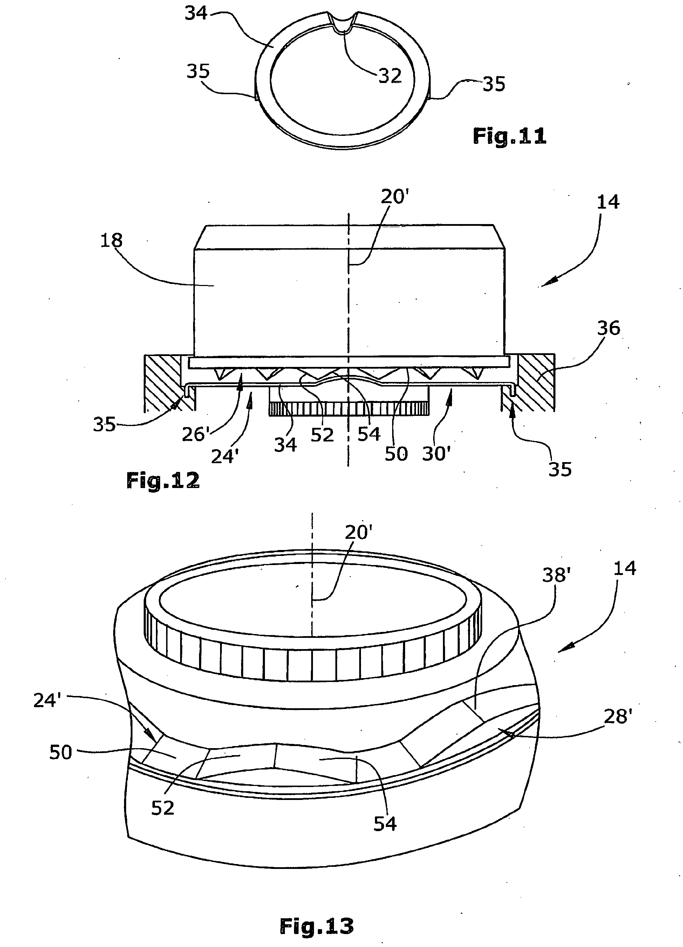

In Fig. 11 ist eine perspektivische Ansicht auf die Ringfeder 34 dargestellt. Angedeutet ist in Fig. 11, dass der Rastvorsprung 32 als Sicke ausgebildet ist, die eine Kegelstumpfteilfläche bildet. Die Kegelstumpfteilfläche ist zum Mittelpunkt der Ringfeder 34 geneigt.

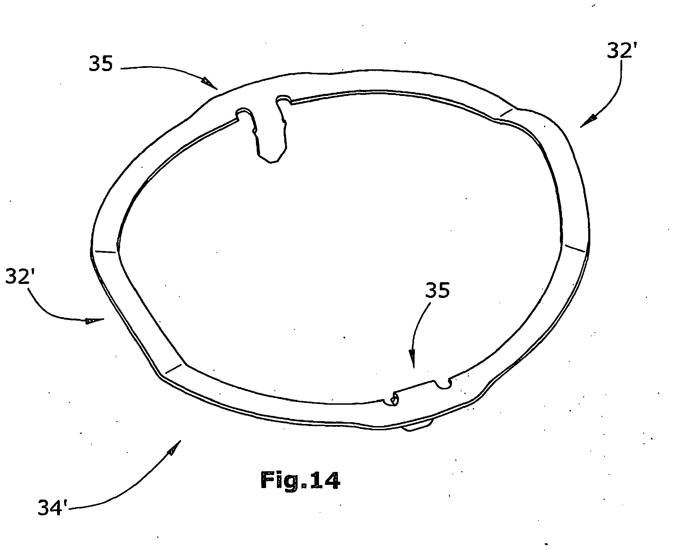

In den Fign. 12 bis 14 ist ein zweites Ausführungsbeispiel einer Rastvorrichtung umfassend eine Rastfeder mit Rastvorsprung und eine Rastkulisse gezeigt, die beim Drehsteller 14 gemäß Fig. 2 eingesetzt werden kann.

Gemäß Fig. 12 ist die Rastkulisse 24' wiederum im Wesentlichen wellenförmig ausgebildet, weist allerdings einzelne ebene Flächenabschnitte 50,52 und 54 auf. Mit 50 sind die den Grund einer Rastmulde 26' bildenden Flächenabschnitte bezeichnet, während die Flächenabschnitte 52 und 54 die beidseitigen Flanken einer Rastmulde 26' bilden. Die beidseitigen Flanken 52,54 erstrecken sich bis zu den Scheitelpunkten 38' der Rasterhöhungen 28' und sind zum Mittelpunkt bzw. zur Drehachse 20' des Drehbedienelements geneigt. Damit sind die Flächenabschnitte 50,52 und 54 ähnlich den Seitenflächen einer Pyramide mit einer vieleckigen (mehr als vier Ecken aufweisenden) Grundfläche angeordnet. Die Ringfeder 34' weist einen Rastvorsprung 32' auf, der gleichmäßig bogenförmig verläuft und einen Radius aufweist, so dass der Rastvorsprung 32' eine Rastmulde 26' überdeckt. Die Form des sickenförmig ausgebildeten Rastvorsprungs 32' ist wiederum kegelstumpfteilflächenförmig. Es gilt auch wiederum, dass der Rastvorsprung 32' bei zentrischer Anordnung in einer Rastmulde 26' die Rastbahn 30' längs zweier Kontaktlinien 42' kontaktiert. Außerhalb des Zentrums einer Rastmulde 26' kontaktiert der Rastvorsprung 32' die Rastbahn 30' längs lediglich einer Kontaktlinie. Damit gilt für den Eintauchvorgang des Rastvorsprungs 32' in eine Rastmulde 26' das Gleiche, was oben im Zusammenhang mit der Beschreibung der Fign. 8 bis 10 ausgeführt ist.

Vorstehend wurden zwei Ausgestaltungen von Rastvorrichtungen beschrieben, und zwar anhand eines rotatorisch bewegbaren Drehbedienelements. Es sei an dieser Stelle darauf hingewiesen, dass die zuvor beschriebenen Rastvorrichtungen auch bei einem translatorisch bewegbaren Bedienelement eingesetzt werden können. Auch hier verändert sich die Neigung der Kontaktlinie zwischen Rastvorsprung und Rastbahn periodisch, wenn der Rastvorsprung entlang der Rastbahn gleitet. Zur Verschleiß- und Geräuschminimierung werden dann die gleichen Mechanismen genutzt, wie sie weiter oben im Zusammenhang mit den beiden beschriebenen Ausführungsbeispielen erläutert worden sind.

### BEZUGSZEICHENLISTE

- 10: Frontblende einer Bedieneinheit
- 12: Bedieneinheit
- 14: Drehsteller der Bedieneinheit
- 16: Drucktasten der Bedieneinheit
- 18: Drehbedienelement des Drehstellers
- 20: Drehachse des Drehbedienelements
- 20': Drehachse des Drehbedienelements
- 22: Stirnseite des Drehbedienelements
- 24: Rastkulisse
- 24': Rastkulisse
- 26: Rastmulden der Rastkulisse
- 26': Rastmulden der Rastkulisse
- 28: Rasterhöhungen der Rastkulisse
- 28': Rasterhöhungen der Rastkulisse
- 30: Rastbahn aus Rastmulden und Rasterhöhungen
- 30': Rastbahn aus Rastmulden und Rasterhöhungen
- 32: Rastvorsprung
- 32': Rastvorsprung
- 34: Ringfeder mit Rastvorsprung
- 34': Ringfeder mit Rastvorsprung
- 35: Fixierbereich für Ringfeder
- 36: Gehäuse der Bedieneinheit
- 37: tiefster Punkt einer Rastmulde
- 38: Scheitelpunkt einer Rasterhöhung
- 38': Scheitelpunkt einer Rasterhöhung
- 40: Kontaktlinie
- 42: Kontaktlinie
- 42': Kontaktlinie
- 44: Rastvorsprungsoberfläche
- 50: tiefster Flächenabschnitt einer Rastmulde
- 52: Flanken-Flächenabschnitt einer Rastmulde
- 54: Flanken-Flächenabschnitt einer Rastmulde

## Patentansprüche

1. Rastvorrichtung für ein rotatorisch oder translatorisch bewegbares Bedienelement, mit
- einem federelastisch gelagerten Rastvorsprung (32,32') und
- einer in Gleitkontakt mit dem Rastvorsprung (32,32') stehenden Rastkulisse (24,24'), die mehrere Rastmulden (26,26') mit zwischen diesen angeordneten Rasterhöhungen aufweist,
- wobei die Rastmulden (26,26') und die Rasterhöhungen (28,28') eine im Wesentlichen wellenförmige Rastbahn (30,30') bilden, die ober- und unterhalb einer Rastbahnerstreckungsebene verläuft und auf der der Rastvorsprung (32,32') bei einer Relativbewegung von Rastkulisse (24) und Rastvorsprung (32,32') entlang gleitet, und
- wobei der Rastvorsprung (32,32') eine Oberfläche (44) aufweist, die die Rastbahn (30,30') längs mindestens einer im Wesentlichen quer zur Längserstreckung der Rastbahn (30,30') verlaufenden Kontaktlinie (40,42,40',42') berührt,
**dadurch gekennzeichnet,**
- **dass** der Rastvorsprung (32,32') beim Gleiten entlang der Rastbahn (30,30') eine Auf- und Abbewegung unter periodischer Veränderung der Neigung seiner Kontaktlinie (40,42,40',42') zur Rastbahnerstreckungsebene erfährt und
- **dass** die Oberfläche der Rastbahn (30,30') eine der Neigungsveränderung der Kontaktlinie (40,42,40',42') des Rastvorsprungs (32,32') bei dessen Auf- und Abbewegung folgende Veränderung der Neigung zur Rastbahnerstreckungsebene aufweist.

2. Rastvorrichtung nach Anspruch 1, **dadurch gekennzeichnet, dass** die Oberfläche (44) der Rastbahn (30,30') zwischen den Scheitelpunkten (38) zweier benachbarter Rasterhöhungen (28,28') als Kegelstumpfteilfläche oder als teilpyramidenartige Fläche mit quer zur Erstreckung der Rastbahn (30,30') verlaufender Kegel- bzw. Pyramidenachse ausgebildet ist.

3. Rastvorrichtung nach Anspruch 1 oder 2, **dadurch gekennzeichnet, dass** der Rastvorsprung (32,32') an einem Federarm (34,34') ausgebildet ist, dass der Federarm (34,34') an mindestens einem Ende fixiert und der Rastvorsprung (32,32') beabstandet dazu angeordnet ist und dass sich der Federarm (34,34') zwischen seinem fixierten Ende und dem Rastvorsprung (32,32') beim Auf- und Abbewegen des Rastvorsprungs (32,32') bogenförmig verformt.

4. Rastvorrichtung nach Anspruch 3, **dadurch gekennzeichnet, dass** der Federarm (34,34') - in der Draufsicht auf die Rastbahn (30,30') betrachtet - im Wesentlichen geradlinig und rechtwinklig zur Ausrichtung der Rastbahn (30,30') verläuft und dass der Rastvorsprung (32,32') als kegelstumpfteilflächenförmige Sicke mit einer im Wesentlichen in Erstreckung des Federarms (34,34') verlaufenden Kegelachse ausgebildet ist.

5. Rastvorrichtung nach Anspruch 4, **dadurch gekennzeichnet, dass** der Federarm (34,34') - in der Draufsicht auf die Rastbahn (30,30') betrachtet - der Rastbahn (30,30') folgend ringförmig verläuft, dass der bogenförmige Federarm (34,34') an seinen beiden aneinander abgewandten Enden fixiert ist und dass der Rastvorsprung (32,32') im Wesentlichen im Bereich des Scheitelpunkts (38) des bogenförmigen Federarms (34,34') angeordnet und als kegelstumpfteilflächenförmige Sicke mit einer radial zur Ringform des Federarms verlaufenden Kegelachse ausgebildet ist.

6. Rastvorrichtung nach Anspruch 5, **dadurch gekennzeichnet, dass** die Rastkulisse (24,24') entlang einer Kreislinie verläuft und dass der Federarms (34,34') als Ringfeder mit einem Rastvorsprung (32,32') oder mit zwei diametral angeordneten Rastvorsprüngen (32,32') und zwei gegenüber jedem Rastvorsprung (32,32') um 90° versetzt angeordneten Fixierbereichen ausgebildet ist.

## Claims

1. A latching device for a rotationally or translationally movable operating element, comprising
- a resiliently mounted latching projection (32,32') and
- a latching guideway (24,24') being in sliding contact with the latching projection (32,32') and having a plurality of latching depressions (26,26') with latching elevations arranged between them,
- the latching depressions (26,26') and the latching elevations (28, 28') forming a substantially corrugated latching path (30,30') which extends above and below a latching path extension plane and along which the latching projection (32,32') slides during a relative movement between the latching guideway (24) and the latching projection (32,32'), and
- the latching projection (32,32') having a surface (44) which contacts the latching path (30,30') along at least one contact line (40,42, 40',42') running substantially transversely to the longitudinal extension of the latching path (30,30'),
**characterized in**
- **that**, when sliding along the latching path (32,32'), the latching projection (30,30') experiences an upward and downward movement with periodic change of the orientation of its contact line (40,42, 40',42') with respect to the latching path extension plane, and
- **that** the surface of the latching path (30,30') has a change of inclination relative to the latching path extension plane, which change follows the change of inclination of the contact line (40,42,40',42') of the latching projection (32,32') during its upward and downward movement.

2. The latching device according to claim 1, **characterized in that** the surface (44) of the latching path (30,30') between the vertices (38) of two adjacent latching elevations (28,28') is formed as a frustoconical partial surface or as a part-pyramidal surface having a cone and respectively pyramid axis arranged transversely to the extension of the latching path (30,30').

3. The latching device according to claim 1 or 2, **characterized in that** the latching projection (32,32') is formed on a spring arm (34,34'), that the spring arm (34,34') is fixed on at least one end and the latching projection (32,32') is arranged at a distance thereto, and that, during the upward and downward movement of the latching projection (32, 32'), the spring arm (34,34') is deformed in a curved shape between its fixed end and the latching projection (32,32').

4. The latching device according to claim 3, **characterized in that** the spring arm (34,34') - when seen in plan view onto the latching path (30,30') - extends substantially linearly and at a right angle to the orientation of the latching path (30,30'), and that the latching projection (32,32') is designed as a crimp formed with a frustoconical part-surface and having a cone axis arranged substantially along the extension of the spring arm (34,34').

5. The latching device according to claim 4, **characterized in that** the spring arm (34,34') - when seen in plan view onto the latching path (30,30') - extends annularly following the latching path (30,30'), that the curved spring arm (34,34') is fixed on its two ends facing away from each other and that the latching projection (32,32') is arranged substantially in the area of the vertex (38) of the curved spring arm (34,34') and is designed as a crimp formed with a frustoconical part-surface and having a cone axis arranged radially relative to the annular shape of the spring arm.

6. The latching device according to claim 5, **characterized in that** the latching guideway (24,24') extends along a circular line and that the spring arm (34,34') is formed as an annular spring comprising a latching projection (32,32') or comprising two diametrically arranged latching projections (32,32') and two fixing areas arranged at a displacement of 90° relative to each latching projection (32,32').

## Revendications

1. Dispositif d'arrêt pour un élément de commande mobile en rotation ou en translation, avec
- une saillie d'arrêt (32, 32') montée de manière élastique par ressort et
- une coulisse d'arrêt (24, 24') en contact glissant avec la saillie d'arrêt (32, 32') et qui comprend plusieurs enfoncements d'arrêt (26, 26') avec des surélévations d'arrêt entre ceux-ci,
- les enfoncements d'arrêt (26, 26') et les surélévations d'arrêt (28, 28') formant une piste d'arrêt (30, 30') essentiellement ondulée qui s'étend au-dessus et en dessous d'un plan d'étendue de piste d'arrêt et sur laquelle la saillie d'arrêt (32, 32') glisse lors d'un mouvement relatif de la coulisse d'arrêt (24) et de la saillie d'arrêt (32, 32'), et
- la saillie d'arrêt (32, 32') présentant une surface (44) qui touche la piste d'arrêt (30, 30') le long d'une ligne de contact (40, 42, 40', 42') s'étendant essentiellement transversalement à l'étendue longitudinale de la piste d'arrêt (30, 30'),
**caractérisé**
- **en ce que** la saillie d'arrêt (32, 32') est soumise, lors du glissement le long de la piste d'arrêt (30, 30'), à un mouvement de montée et de descente avec changement périodique de la pente de sa ligne de contact (40, 42, 40', 42') vers le plan d'étendue de piste d'arrêt et
- **en ce que** la surface de la piste d'arrêt (30, 30') présente un changement de la pente vers le plan d'étendue de piste d'arrêt suivant le changement de pente de la ligne de contact (40, 42, 40', 42') de la saillie d'arrêt (32, 32') lors de son mouvement de montée et de descente.

2. Dispositif d'arrêt selon la revendication 1, **caractérisé en ce que** la surface de la piste d'arrêt (30, 30') est formée, entre les sommets (38) de deux surélévations (28, 28') avoisinantes, comme une surface partielle (44) d'un cône tronqué ou comme une surface d'une partie de pyramide avec un axe de cône ou de pyramide s'étendant transversalement à l'étendue de la piste d'arrêt (30, 30').

3. Dispositif d'arrêt selon la revendication 1 ou 2, **caractérisé en ce que** la saillie d'arrêt (32, 32') est formée sur un bras de ressort (34, 34'), **en ce que** le bras de ressort (34, 34') est fixé sur au moins un côté et que la saillie d'arrêt (32, 32') est disposée espacée de celui-ci et **en ce que** le bras de ressort (34, 34') se déforme sous la forme d'un arc entre son extrémité fixée et la saillie d'arrêt (32, 32') lors du mouvement de montée et de descente de la saillie d'arrêt (32, 32').

4. Dispositif d'arrêt selon la revendication 3, **caractérisé en ce que** le bras de ressort (34, 34') - vu dans une vue de dessus sur la piste d'arrêt (30, 30') - s'étend de façon sensiblement rectiligne et perpendiculairement à l'orientation de la piste d'arrêt (30, 30') et **en ce que** la saillie d'arrêt (32, 32') est formée comme une nervure ayant la forme d'une surface partielle de cône tronqué avec un axe de cône s'étendant essentiellement le long de l'étendue du bras de ressort (34, 34').

5. Dispositif d'arrêt selon la revendication 4, **caractérisé en ce que** le bras de ressort (34, 34') - vu dans une vue de dessus sur la piste d'arrêt (30, 30') - s'étend de façon annulaire suivant la piste d'arrêt (30, 30'), **en ce que** le bras de ressort (34, 34') en forme d'arc est fixé à ses deux extrémités éloignées l'une de l'autre et **en ce que** la saillie d'arrêt (32, 32') est disposée sensiblement dans la zone du sommet (38) du bras de ressort (34, 34') en forme d'arc et est formée comme une nervure ayant la forme d'une surface partielle de cône tronqué avec un axe de cône s'étendant radialement par rapport à la forme annulaire du bras de ressort.

6. Dispositif d'arrêt selon la revendication 5, **caractérisé en ce que** la coulisse d'arrêt (24, 24') s'étend le long d'une ligne circulaire et **en ce que** le bras de ressort (34, 34') est formé comme un ressort annulaire avec une saillie d'arrêt (32, 32') ou avec deux saillies d'arrêt (32, 32') disposées de façon diamétralement opposée et deux zones de fixation disposées de façon décalée de 90° par rapport à chaque saillie d'arrêt (32, 32').
